(19) Europäisches Patentamt / European Patent Office / Office européen des brevets

(11) **EP 3 540 541 B1**

(12) **EUROPEAN PATENT SPECIFICATION**

(45) Date of publication and mention
of the grant of the patent:
**17.02.2021 Bulletin 2021/07**

(51) Int Cl.:
*G05B 19/418* (2006.01)     *G05B 19/4103* (2006.01)

(21) Application number: **19151156.7**

(22) Date of filing: **10.01.2019**

(54) **CONTROL DEVICE, CONTROL METHOD, AND PROGRAM**

STEUERUNGSVORRICHTUNG, STEUERUNGSVERFAHREN UND PROGRAMM

PROCÉDÉ, DISPOSITIF ET PROGRAMME DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2018 JP 2018044531**

(43) Date of publication of application:
**18.09.2019 Bulletin 2019/38**

(73) Proprietor: **OMRON Corporation
Shiokoji-dori, Shimogyo-Ku
Kyoto-shi
Kyoto 600-8530 (JP)**

(72) Inventors:
• **KOGAWARA, Toru**
**Kyoto-shi, Kyoto 600-8530 (JP)**
• **SHIMAMURA, Junji**
**Kyoto-shi, Kyoto 600-8530 (JP)**

(74) Representative: **Becker & Kurig Partnerschaft
Patentanwälte PartmbB
Bavariastrasse 7
80336 München (DE)**

(56) References cited:
**EP-A1- 2 144 127     JP-A- H03 142 180**

## Description

### BACKGROUND

Technical Field

The present disclosure relates to a control device, and more specifically, to a control device which synchronizes a master device with a slave device and controls the master device and the slave device. In addition, the present invention relates to a control method and a program for performing such control.

Description of Related Art

As a conventional control device of this type, for example, a device which adds, as a correction amount (correction synchronization data), synchronization data to a position command value for a slave device in order to perform a coordinated operation of a master device (coordination reference) and the slave device (control target) as disclosed in Patent Document 1 (Japanese Patent Application Laid-open No. H06-138920) is known.

[Literature Documents]

[Patent Documents]

[Patent Document 1] Japanese Patent Application Laid-open No. H06-138920
JP H03142180 A discloses a positional information converting means which algebraically converts the positional information measured by a position detecting means of a master side manipulator into the aiming positional information of each axis of a slave side.
EP 2144127 A1 discloses a method comprising carrying an object to be picked by a conveyor device. A pickup of a multi-axis handling device is synchronized with the moving conveyor device for displacing the object, where the pickup is synchronized along computationally-determined polynomial path of third order between a starting point and a destination point. The polynomial path of third order is defined by the starting point, the destination point and tangential vectors in the starting point and the destination point.

### SUMMARY

[Problems to be solved]

Distinguished from the conventional example, the applicant has developed a method of synchronizing a master device with a slave device to control the master device and the slave device by obtaining a command value for each axis of the slave device through an arithmetic operation at a fixed period (e.g., a period of about 0.5 msec to 1 msec) based on a command value for each axis (which refers to a "control axis" throughout the description) of the master device. Accordingly, it is possible to synchronize the master device with the slave device with high accuracy.

When the master device and the slave device are synchronized and controlled at a fixed period in this manner, the amount of calculations for a synchronization operation for maintaining the position of the master device and the position of the slave device in a predetermined corresponding relation (e.g., an operation of performing transformation of a predetermined function with respect to the position of the master device) increases in proportion to the number of axes to be computed. Further, when the number of axes of the master device differs from the number of axes of the slave device, it is necessary to perform coordinate transformation from the coordinate system of the master device into the coordinate system of the slave device in a process of obtaining a command value for each axis of the slave device from a command value for each axis (or a measured current value of each axis) of the master device. Accordingly, the amount of calculations needs to be reduced.

Therefore, an objective of the present invention is to provide a control device which synchronizes and controls a master device and a slave device at a fixed period and is capable of reducing the amount of calculations. In addition, an objective of the present invention is to provide a control method and a program for the control device.

[Means to Solve Problems]

To solve the aforementioned objectives, a control device of the present disclosure is a control device for synchronizing and controlling a master device and a slave device at a fixed period when the number of axes of the master device is less than the number of axes of the slave device, the control device including: a computing unit which obtains a command value for each axis of the slave device through computation at the fixed period based on a command value for each axis or a measured current value of each axis of the master device, wherein the computing unit includes: a synchronization computing unit which performs synchronization computation for maintaining the position of the master device and the position of the slave device in a predetermined corresponding relation for the command value for each axis or the measured current value of each axis of the master device at the fixed period; and a coordinate transformation unit which performs coordinate transformation from a coordinate system of the master device into a coordinate system of the slave device for synchronization computation result values obtained through the synchronization computation.

In the present description, "axes" of a master device and a slave device respectively refer to control axes. For example, devices having various numbers of axes, such as a 1-axis device like a conveyor belt, a 2-axis device like an X-Y table, a 4-axis device like a 4-axis horizontal articulated robot, and a 6-axis device like a 6-axis articulated robot, can be objects for a master device and a slave device. However, the present invention is applied in cases in which the number of axes of a master device is less than the number of axes of a slave device.

"Synchronization computation" refers to computation performed at the fixed period to maintain the position of the master device and the position of the slave device in a predetermined corresponding relation. "Predetermined corresponding relation" represents a relation in which the position of the slave device varies (including acceleration or deceleration) according to a predetermined relation (e.g., a function representing a cam curve) with respect to changes in the position of the master device. The meaning of "positions" of the master device and the slave device includes a translation component and/or a rotation component.

"Coordinate transformation" represents transformation from a position based on a coordinate system (e.g., XYZ coordinate system) of the master device into a position based on a coordinate system (e.g., xyz coordinate system) of the slave device. For example, when positional changes (or the synchronization computation result values) of the master device correspond to a diagonal vector (in which any of x, y and z components is not zero) in the xyz coordinate system of the slave device, "coordinate transformation" corresponds to obtaining projection (x, y and z components) of the vector.

In the control device of the present disclosure, the computing unit obtains a command value for each axis of the slave device through computation at a fixed period based on a command value for each axis or a measured current value of each axis of the master device. In this procedure, the synchronization computing unit of the computing unit first performs synchronization computation for maintaining the position of the master device and the position of the slave device in a predetermined corresponding relation for the command value for each axis or the measured current value of each axis of the master device at the fixed period. Thereafter, the coordinate transformation unit of the computing unit performs coordinate transformation from the coordinate system of the master device into the coordinate system of the slave device for synchronization computation result values obtained according to the synchronization computation. Accordingly, a command value for each axis of the slave device is obtained. When changes in the synchronization computation result values correspond to a diagonal vector (in which any of x, y and z components is not zero) in the coordinate system (e.g., xyz coordinate system) of the slave device, for example, the coordinate transformation corresponds to obtaining projection (x, y and z components) of the vector. Accordingly, calculation is relatively simply performed even if the number of axes of the slave device is relatively large. Therefore, according to the control device, it is possible to reduce the amount of calculations in the process of obtaining the command value for each axis of the slave device from the command value for each axis (or the measured current value of each axis) of the master device.

In another aspect, a control method of the present disclosure is for obtaining a command value for each axis of a slave device through computation at a fixed period based on a command value for each axis or a measured current value of each axis of a master device and synchronizing and controlling the master device and the slave device when the number of axes of the master device is less than the number of axes of the slave device, the control method including: performing synchronization computation for maintaining the position of the master device and the position of the slave device in a predetermined corresponding relation for the command value for each axis or the measured current value of each axis of the master device at the fixed period; and then performing coordinate transformation from a coordinate system of the master device into a coordinate system of the slave device for synchronization computation result values obtained through the synchronization computation.

According to the control method of the present disclosure, it is possible to reduce the amount of calculations in the process of obtaining the command value for each axis of the slave device from the command value for each axis (or the measured current value of each axis) of the master device.

In another aspect, a program of the present disclosure is a program causing a computer to execute the aforementioned control method.

It is possible to implement the aforementioned control method by causing a computer to execute the program of the present disclosure.

[Effect]

As is apparent from the above description, according to the control device, the control method and the program of the present disclosure, it is possible to reduce the amount of calculations in a process of obtaining a command value for each axis of the slave device from a command value for each axis (or a measured current value of each axis) of the master device.

**BRIEF DESCRIPTION OF THE DRAWINGS**

FIG. 1 is a diagram showing a block configuration when a control device of an embodiment of the present invention is applied to a certain control system.
FIG. 2 is a diagram schematically showing the exterior of the control system.
FIG. 3 is a diagram explaining an operation performed by a central computing unit of the control device in the control system as an operation example in a control method of an embodiment of the present invention.

## DESCRIPTION OF THE EMBODIMENTS

Hereinafter, embodiments of the present invention will be described in detail with reference to the drawings.

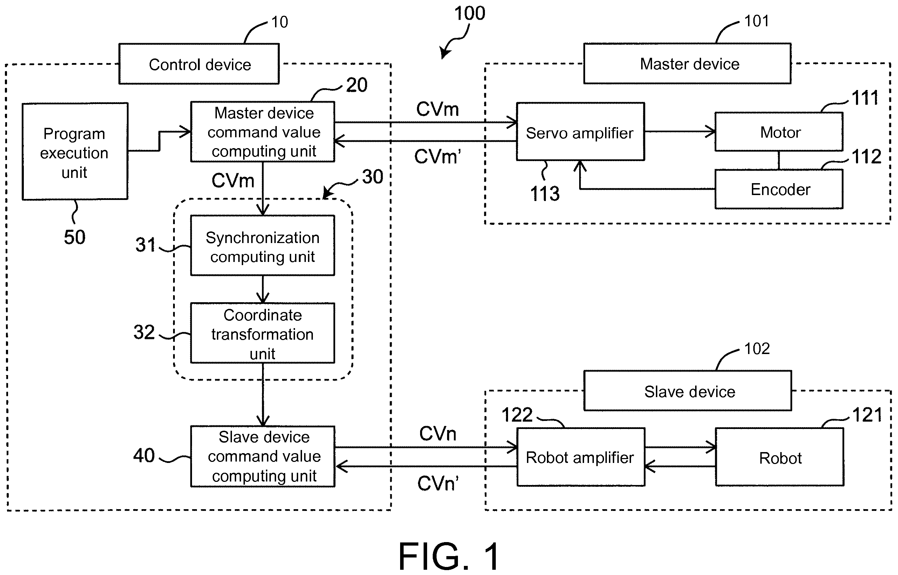

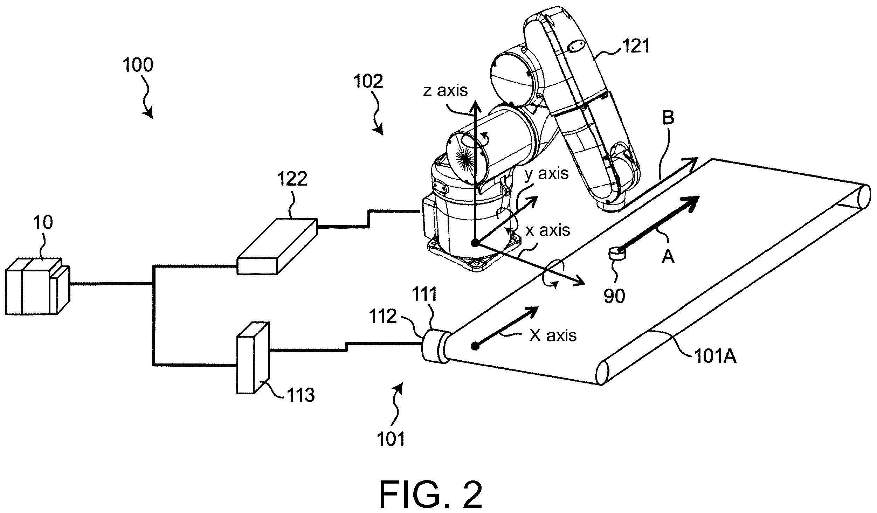

FIG. 1 is a diagram showing a block configuration when a control device 10 of an embodiment of the present invention is applied to a certain control system 100. In addition, FIG. 2 is a diagram schematically showing the exterior of the control system 100. As shown in these figures, the control system 100 roughly includes a master device 101 serving as a 1-axis conveyor belt, a slave device 102 serving as a 6-axis robot, and the control device 10 which synchronizes and controls the master device 101 and the slave device 102 at a fixed period t (e.g., a period of about t=0.5 msec to 1 msec).

As shown in FIG. 2, the master device 101 includes a motor 111 which drives a belt 101A in the X-axis direction according to a command value CVm from the control device 10, an encoder 112 which is integrated with the motor 111 and measures a current value (current position) CVm' of the motor 111, and a servo amplifier 113 which drives the motor 111 based on signals representing the command value CVm from the control device 10 and the current value CVm' from the encoder 112 in this example. A work object (hereinafter referred to as a "workpiece") 90 on the belt 101A moves in the X-axis direction as represented by an arrow A.

The slave device 102 includes a 6-axis articulated robot 121 and a robot amplifier 122 which drives the robot 121 according to a signal representing a command value CVn from the control device 10 in this example.

In this example, the master device 101 has a degree of freedom of 1 axis (X axis). The slave device 102 has a degree of freedom of 6 axes of x, y, z, yaw, pitch and roll. That is, the number m of axes of the master device 101 (m=1 in this example) is less than the number n of axes of the slave device 102 (n=6 in this example), i.e., m<n. In addition, the X axis of the master device 101 does not coincide with any of the x, y and z axes of the slave device 102 in this example. Accordingly, a variation in a position X (or a synchronization computation result value which will be described later) of the master device 101 corresponds to a diagonal vector (in which any of x, y and z components is not zero) in the xyz coordinate system of the slave device 102.

As shown in FIG. 1, the control device 10 includes a program execution unit 50 which executes a program designated by a user, a master device command value computing unit 20, a central computing unit 30, and a slave device command value computing unit 40. In this example, the master device command value computing unit 20, the central computing unit 30 and the slave device command value computing unit 40 constitute a computing unit.

The master device command value computing unit 20 receives an instruction from the program execution unit 50 and computes and generates command values (master device command values) CVm for the master device 101, which are composed of elements of the same number m as the number m of axes, in order to control the master device 101 having the m axes (m=1 in this example). Signals representing the master device command values CVm are transmitted to the master device 101. The servo amplifier 113 of the master device 101 reflects a current value CVm' from the encoder 112 to update the master device command value CVm of each axis (X axis in this example) at a fixed period t so as to drive the motor 111. The current value CVm' is transmitted to the master device command value computing unit 20. In this manner, the master device 101 is controlled by the control device 10 (particularly, the master device command value computing unit 20).

The slave device command value computing unit 40 receives an instruction from a synchronization instruction unit which is not shown and computes and generates command values (slave device command values) CVn for the slave device 102, which are composed of elements of the same number n as the number n of axes, based on synchronization computation result values which will be described later in order to control the slave device 102 having the n axes (n=6 in this example). Signals representing the slave device command values CVn are transmitted to the slave device 102. The robot amplifier 122 of the slave device 102 reflects a current value CVn' of each axis from the robot 121 to update the slave device command value CVn of each axis at the fixed period t so as to drive the robot 121. The current value CVn' is transmitted to the slave device command value computing unit 40. In this manner, the slave device 102 is controlled by the control device 10 (particularly, the slave device command value computing unit 40).

The central computing unit 30 includes a synchronization computing unit 31 and a coordinate transformation unit 32. Next, the operation of the control device 10 (particularly, the central computing unit 30) in the control system 100 will be described as an operation example of a control method of an embodiment.

The synchronization computing unit 31 performs synchronization computation (which is represented as a sign S1) for maintaining the position of the master device 101 and the position of the slave device 102 in a predetermined corresponding relation for a command value CVm for each axis (X axis in this example) (or a measured current value CVm' of each axis) of the master device 101 at the fixed period t.

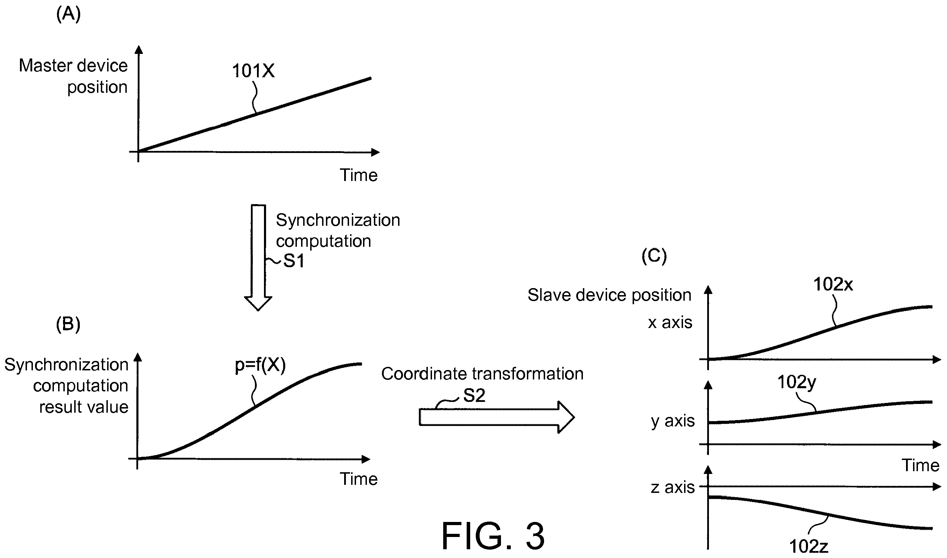

For example, it is assumed that a position (X-axis position) 101X of the master device 101 increases linearly with the lapse of time, as shown in (A) of FIG. 3. Further, in this example, it is assumed that the predetermined corresponding relation is a relation in which the slave device 102 is accelerated or decelerated in accordance with a certain cam curve q=f(X) according to changes in the position (X-axis position) 101X of the master device 101. Here, the synchronization computing unit 31 obtains a synchronization computation result value p=f(X) by performing the synchronization computation S1, as shown in (B) of FIG. 3. Meanwhile, since the display scale of the time axis (horizontal axis) is considerably larger than the period t in (A) to (C) of FIG. 3, a step-like change in the graph for each period t is not shown.

Although the synchronization computation S1, for example, requires a considerable amount of calculations if the predetermined corresponding relation is a computation according to a curve (the aforementioned cam curve in this example), this is not a problem when number m of axes of the master device 101 is less than the number n of axes of the slave device 102 (in the case of m<n) because the number m of axes is relatively small.

Thereafter, the coordinate transformation unit 32 illustrated in Fig. 1 performs coordinate transformation (which is represented by a sign S2) from the XYZ coordinate system of the master device 101 into the xyz coordinate system of the slave device 102 for the synchronization computation result value p obtained according to the synchronization computation S1.

As described above, changes in the synchronization computation result value p correspond to a diagonal vector (in which any of x, y and z components is not zero) in the xyz coordinate system of the slave device 102 in this example. The coordinate transformation unit 32 obtains projection (x, y and z components) of the vector as shown in (C) of FIG. 3. Specifically, the x, y and z components are obtained according to the following equations using the synchronization computation result value p.

$$x=K_x \times p+O_x$$
$$y=K_y \times p+O_y$$
$$z=K_z \times p+O_z \qquad \ldots (Eq.\ 1)$$

(Here, $K_x$, $K_y$ and $K_z$ represent coefficients of the axes and $O_x$, $O_y$ and $O_z$ represent offset values of the axes.)

For example, the x, y and z components are obtained as represented by curves 102x, 102y and 102z in (C) of FIG. 3. These curves 102x, 102y and 102z represent positions to be taken by the x axis, y axis and z axis of the slave device 102.

Meanwhile, as can be understood from the equations (Eq. 1), changes in the synchronization computation result value p may correspond to a vector parallel to any of the xy plane, yz plane and zx plane in the xyz coordinate system of the slave device 102 or correspond to a vector parallel to any of the x axis, y axis and z axis. In such cases, one or two of the coefficients $K_x$, $K_y$ and $K_z$ become zero.

The coordinate transformation S2 corresponds to obtaining projection (x, y and z components) of the vector, and thus calculation is relatively simple even when the number n of axes of the slave device 102 is relatively large (n=6 in this example). Accordingly, the amount of calculations can be reduced in the process of obtaining the command value CVn for each axis of the slave device 102 from the command value CVm for each axis (or the measured current value CVm' of each axis) of the master device 101 according to the control device 10.

Thereafter, the slave device command value computing unit 40 receives signals representing the x, y and z components from the coordinate transformation unit 32 and updates the command value CVn for each axis of the slave device 102.

In this example, the slave device 102 receives signals representing the command values CVn through the robot amplifier 122, and moves while being accelerated or decelerated according to the cam curve p=f(X) in synchronization with changes in the position of the master device 101 (i.e., movement of the workpiece 90 represented by the arrow A), as represented by an arrow B in FIG. 2.

In this manner, the amount of calculations can be reduced in the process of obtaining the command value CVn for each axis of the slave device 102 from the command value CVm for each axis (or the measured current value CVm' of each axis) of the master device 101 according to the control device 10.

The above-described control device 10 can be substantially configured using a computer device (e.g., a programmable logic controller (PLC) or the like). Accordingly, it is desirable to configure the control method (the process of performing the synchronization computation S1 and then performing the coordinate transformation S2) described as the operation of the central computing unit 30 as a program executed by a computer. In addition, it is desirable to record such a program in a computer-readable non-transitory recording medium. In such a case, it is possible to implement the above-described control method by causing a computer device to read and execute such a program recorded in a recording medium.

In the above-described example, it is assumed that the master device 101 is a 1-axis conveyor belt and the slave device 102 is a 6-axis robot. However, the present invention is not limited thereto. For example, devices having various numbers m and n of axes, such as a 1-axis device like a conveyor belt, a 2-axis device like an X-Y table, a 4-axis device like a 4-axis parallel link robot, a 5-axis device like a 5-axis horizontal articulated robot, and a 6-axis device like a 6-axis articulated robot, can be objects for a master device and a slave device. However, the present invention is applied in cases in which the number m of axes of a master device is less than the number n of axes of a slave device.

[Reference Signs List]

10      Control device

30    Central computing unit
31    Synchronization computing unit
32    Coordinate transformation unit
100   Control system
101   Master device
102   Slave device

**Claims**

1.  A control device for synchronizing and controlling a master device (101) and a slave device (102) at a fixed period when a number of axes of the master device (101) is less than a number of axes of the slave device (102), comprising:

    a computing unit (30) configured to obtain a command value (CVn) for each axis of the slave device (102) through computation at the fixed period based on a command value (CVm) for each axis or a measured current value (CVm') of each axis of the master device (101), wherein the computing unit (30) comprises:

    a synchronization computing unit (31) configured to perform synchronization computation for maintaining a position of the master device (101) and a position of the slave device (102) in a predetermined corresponding relation for the command value (CVm) for each axis or the measured current value (CVm') of each axis of the master device (101) at the fixed period; the control device being **characterized in** further comprising:
    a coordinate transformation unit (32) configured to perform coordinate transformation from a coordinate system of the master device (101) into a coordinate system of the slave device (102) for synchronization computation result values obtained through the synchronization computation.

2.  A control method for obtaining a command value (CVn) for each axis of a slave device (102) through computation at a fixed period based on a command value (CVm) for each axis or a measured current value (CVm') of each axis of a master device (101) and synchronizing and controlling the master device (101) and the slave device (102) when the number of axes of the master device (101) is less than the number of axes of the slave device (102), comprising:
    performing synchronization computation for maintaining a position of the master device (101) and a position of the slave device (102) in a predetermined corresponding relation for the command value (CVm) for each axis or the measured current value

(CVm') of each axis of the master device (101) at the fixed period; the control method being **characterized in** further comprising:
performing coordinate transformation from a coordinate system of the master device (101) into a coordinate system of the slave device (102) for synchronization computation result values obtained through the synchronization computation.

3.  A program which, when executed by a computer, causes the computer to execute the control method according to claim 2.

**Patentansprüche**

1.  Steuerungsvorrichtung zum Synchronisieren und Steuern einer Master-Vorrichtung (101) und einer Slave-Vorrichtung (102) zu einer festen Periode, wenn eine Anzahl von Achsen der Master-Vorrichtung (101) kleiner als eine Anzahl von Achsen der Slave-Vorrichtung (102) ist, umfassend:

    eine Recheneinheit (30), die konfiguriert ist, einen Befehlswert (CVn) für jede Achse der Slave-Vorrichtung (102) durch Berechnung zu der festen Periode basierend auf einem Befehlswert (CVm) für jede Achse oder eines gemessenen Stromwerts (CVm') jeder Achse der Master-Vorrichtung (101) zu erhalten, wobei die Recheneinheit (30) umfasst:

    eine Synchronisationsrecheneinheit (31), die konfiguriert ist, eine Synchronisationsrechnung zum Aufrechterhalten einer Position der Master-Vorrichtung (101) und einer Position der Slave-Vorrichtung (102) in einer vorbestimmten entsprechenden Beziehung für den Befehlswert (CVm) für jede Achse oder den gemessenen Stromwert (CVm') jeder Achse der Master-Vorrichtung (101) zu der festen Periode durchzuführen; wobei die Steuerungsvorrichtung **dadurch gekennzeichnet ist, dass** sie ferner umfasst:
    eine Koordinatentransformationseinheit (32), die konfiguriert ist, eine Koordinatentransformation von einem Koordinatensystem der Master-Vorrichtung (101) in ein Koordinatensystem der Slave-Vorrichtung (102) für Ergebniswerte der Synchronisationsrechnung durchzuführen, die durch die Synchronisationsrechnung erhalten werden.

2.  Steuerverfahren zum Erhalten eines Befehlswerts (CVn) für jede Achse einer Slave-Vorrichtung (102) durch Berechnung zu einer festen Periode basierend auf einem Befehlswert (CVm) für jede Achse oder eines gemessenen Stromwerts (CVm') jeder Achse einer Master-Vorrichtung (101) und Synchronisieren und Steuern der Master-Vorrichtung (101) und der Slave-Vorrichtung (102), wenn die Anzahl der Achsen der Master-Vorrichtung (101) geringer ist als die Anzahl der Achsen der Slave-Vorrichtung (102), umfassend:

Durchführen einer Synchronisationsrechnung zum Aufrechterhalten einer Position der Master-Vorrichtung (101) und einer Position der Slave-Vorrichtung (102) in einer vorbestimmten entsprechenden Beziehung für den Befehlswert (CVm) für jede Achse oder den gemessenen Stromwert (CVm') jeder Achse der Master-Vorrichtung (101) zu der festen Periode; wobei das Steuerverfahren **dadurch gekennzeichnet ist, dass** es ferner umfasst:

Durchführen einer Koordinatentransformation von einem Koordinatensystem der Master-Vorrichtung (101) in ein Koordinatensystem der Slave-Vorrichtung (102) für Ergebniswerte der Synchronisationsrechnung, die durch die Synchronisationsrechnung erhalten werden.

3.  Programm, das, wenn ausgeführt durch einen Computer, den Computer veranlasst, das Steuerverfahren gemäß Anspruch 2 auszuführen.

**Revendications**

1.  Dispositif de commande pour synchroniser et commander un dispositif maître (101) et un dispositif esclave (102) à une période fixe lorsqu'un nombre d'axes du dispositif maître (101) est inférieur à un nombre d'axes du dispositif esclave (102), comprenant :

    une unité de calcul (30) configurée pour obtenir une valeur de commande (CVn) pour chaque axe du dispositif esclave (102) par un calcul à la période fixe sur la base d'une valeur de commande (CVm) pour chaque axe ou une valeur courante mesurée (CVm') de chaque axe du dispositif maître (101),
    dans lequel l'unité de calcul (30) comprend :
    une unité de calcul de synchronisation (31) configurée pour réaliser un calcul de synchronisation afin de maintenir une position du dispositif maître (101) et une position du dispositif esclave (102) dans une relation correspondante prédéterminée pour la valeur de commande (CVm) pour chaque axe ou la valeur courante mesurée (CVm') de chaque axe du dispositif maître (101) à la période fixe ; le dispositif de commande étant **caractérisé en ce qu'**il comprend en outre :
    une unité de transformation de coordonnées (32) configurée pour réaliser une transformation de coordonnées depuis un système de coordonnées du dispositif maître (101) dans un système de coordonnées du dispositif esclave (102) pour des valeurs de résultat de calcul de synchronisation obtenues par le calcul de synchronisation.

2.  Procédé de commande pour obtenir une valeur de commande (CVn) pour chaque axe d'un dispositif esclave (102) par un calcul à une période fixe sur la base d'une valeur de commande (CVm) pour chaque axe ou une valeur courante mesurée (CVm') de chaque axe d'un dispositif maître (101), et pour synchroniser et commander le dispositif maître (101) et le dispositif esclave (102) lorsque le nombre d'axes du dispositif maître (101) est inférieur au nombre d'axes du dispositif esclave (102), comprenant :

    la réalisation d'un calcul de synchronisation pour maintenir une position du dispositif maître (101) et une position du dispositif esclave (102) dans une relation correspondante prédéterminée pour la valeur de commande (CVm) pour chaque axe ou la valeur courante mesurée (CVm') de chaque axe du dispositif maître (101) à la période fixe ; le procédé de commande étant **caractérisé en ce qu'**il comprend en outre :
    la réalisation d'une transformation de coordonnées depuis un système de coordonnées du dispositif maître (101) dans un système de coordonnées du dispositif esclave (102) pour des valeurs de résultat de calcul de synchronisation obtenues par le calcul de synchronisation.

3.  Programme qui, lorsqu'il est exécuté par un ordinateur, amène l'ordinateur à exécuter le procédé de commande selon la revendication 2.

FIG. 1

FIG. 2

(A)

Master device position

101X

Time

Synchronization computation S1

(B)

p=f(X)

Synchronization computation result value

Time

Coordinate transformation S2

(C)

Slave device position

x axis

102x

y axis

102y

z axis

102z

Time

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06138920 B
- JP H03142180 A
- EP 2144127 A1